Europäisches Patentamt

**European Patent Office**

Office européen des brevets

(11) Publication number: **0 069 175**

**A1**

## (12) EUROPEAN PATENT APPLICATION

(21) Application number: **81303037.6**

(22) Date of filing: **03.07.81**

(51) Int. Cl.³: **F 02 F 5/00**
**F 16 J 9/00**

(43) Date of publication of application:
**12.01.83** Bulletin **83/2**

(84) Designated Contracting States:
**DE FR GB**

(71) Applicant: **NISSAN MOTOR COMPANY, LIMITED**
**No.2, Takara-cho, Kanagawa-ku**
**Yokohama-shi Kanagawa-ken 221(JP)**

(72) Inventor: **Aoyama, Schunichi**
**Room No. 301, Nookendo co-op 19-21, Yanagi-machi**
**Kanazawa-ku Yokohama-shi Kanagawa-ken(JP)**

(74) Representative: **Freed, Arthur Woolf et al,**
**MARKS & CLERK 57-60 Lincoln's Inn Fields**
**London WC2A 3LS(GB)**

(54) Piston for an internal combustion engine.

(57) A sealing structure of the piston (12) for an internal combustion engine, in which two piston rings (20, 22) are disposed within a groove (14) and are freely movable with respect to one another and with respect to the groove. One of the piston rings (20) is adapted to introduce lubricant oil into the groove (14) during the piston up-stroke and the other ring (22) is adapted to introduce the oil into the groove (14) in the piston downstroke. The piston rings reduce the space therebetween to force the lubricant oil in the groove into the space between the piston ring and the cylinder wall at approximately top dead centre.

FIG.2

EP 0 069 175 A1

1.

"PISTON FOR AN INTERNAL COMBUSTION ENGINE"

The present invention relates generally to a piston for an internal combustion engine and, more specifically, to an improvement in the sealing structure of the piston for sealing between the piston and the cylinder wall of the engine.

It has been known to provide a piston ring on the periphery of the piston. Generally, the piston is received within a circumferential groove of the piston and seals between the piston and the cylinder wall of the engine cylinder so that blow-by is prevented. Usually, two piston rings are used on the piston to reduce the pressure drop across each ring. An oil-control ring which prevents too much lubricant oil from passing upwardly into the combustion chamber is also mounted on the periphery of the piston.

As is well known, the piston ring is mounted on the piston in a plane perpendicular to the piston axis. Thus, the frictional force applied to the piston ring corresponding to the motion of the piston is directed substantially in the axial direction and the piston and the piston ring move up and down together. The piston ring is normally prevented from moving in the circumferential direction with respect to the cylinder wall.

Further, the relative speed of the piston ring with respect to the cylinder wall becomes zero at the points of the piston stroke adjacent top and bottom dead centre respectively. As theoretically apparent, this is disadvantageous for establishing a lubricant oil layer on the cylinder wall. Also, the piston is subjected to the high heat of combustion and high pressure of the compressed mixture at the top of the piston stroke when the piston is stationary. This causes the piston ring to be urged against the cylinder wall with substantial force. As a result, in the conventional sealing structure of the piston, the lubricant oil layer may not establish around the top and bottom dead centers of the piston stroke. This tends to cause a large frictional force between the piston ring and the cylinder wall which decreases the engine output and thereby reduces the fuel economy, particularly under low load operating conditions of the engine.

Therefore, it is an object of the present invention to provide a piston having a sealing structure which effectively supplies lubricant oil between the piston ring and the cylinder wall and thus prevents large frictional forces between the piston ring and the cylinder wall, particularly at the point of the piston stroke adjacent top dead centre.

To accomplish the above-mentioned and other objects, there is provided an improved sealing structure of the piston for the internal combustion engine, in which two piston rings are disposed within a groove in a freely movable position with respect to one another and with respect to the groove. The piston rings scrape off the lubricant oil of the lubricant oil layer on the cylinder wall and introduce same into a space therebetween, during the expansion and compression piston strokes. Due to the substantially high gas pressure applied adjacent the top dead center position, the piston rings reduce the space therebetween to force the lubricant oil out from between the piston rings to the sliding clearance between the piston ring and the cylinder wall.

According to the present invention, there is provided an improved sealing structure for a piston comprising a piston formed with a plurality of grooves on its periphery, which piston includes a means for providing a lubricant oil to establish oil layer between the piston and the cylinder wall of the engine cylinder, an oil-control ring mounted on one of the grooves located at the lowermost position with respect to the other grooves, and a pair of piston rings, disposed in one of the grooves other than the lowermost one, spaced from each other and movable with respect one another and with respect to the cylinder wall.

Preferably, the sealing structure includes a means for closing the space between the piston rings for preventing the lubricant oil introduced into the space from entering behind the radially inner end of the piston rings. This serves to effectively establish a lubricant oil layer such that the lubricant oil layer thickness will not vary significantly.

The present invention will be more fully understood from the detailed description given herebelow and from the accompanying drawings in which:-

Figure 1 is a longitudinal section of an engine cylinder showing a first embodiment of a piston according to the present invention;

Figure 2 is an enlarged section of the piston shown in Figure 1 showing the compression stroke of the piston;

Figure 3 is a view similar to Figure 2 but showing the expansion stroke of the piston;  and

Figure 4 is a further enlarged section showing the function of the sealing structure according to the first embodiment.

Figure 5 is a section of a second embodiment of the piston according to the present invention, which illustrates the piston on the compression stroke;

Figure 6 is a view similar to Figure 5 but showing the expansion stroke of the piston;

Figure 7 is an enlarged section of the piston shown in Figure 5 showing the functioning of the sealing structure adjacent top dead centre on the expansion stroke;

Figure 8 is a section of a third embodiment of the piston according to the present invention, in which the piston is on the compression stroke;

Figure 9 is a view similar to Figure 8 but showing the expansion stroke of the piston;

Figure 10 is an enlarged section of the piston shown in Figure 5 showing the functioning of the sealing structure adjacent top dead centre on the expansion stroke;   and

Figures 11 to 14 are enlarged sections respectively showing variations of the sealing structure of the piston shown in Figure 9.

It should be noted that the section of the piston ring, the space between the piston ring and the groove of the piston and so on are exaggerated for better understanding of the invention.

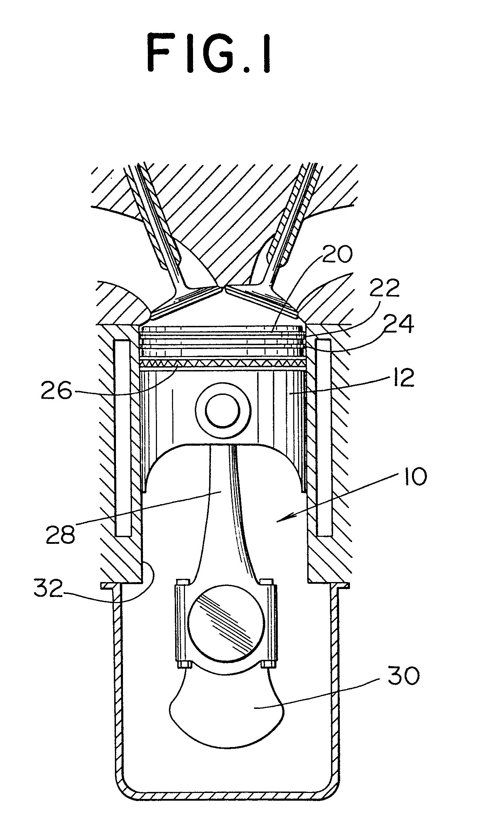

Referring now to the drawings, particularly to Figure 1, there is illustrated an engine cylinder 10 in which a piston 12 is slidably disposed.  The piston 12 is constructed as a well known structure and has circumferential grooves 14, 16 and 18.  Respective grooves 14, 16 and 18 extend the piston parallel to one another and are spaced from each other.  Piston rings 20, 22 are received within the groove 14 and a piston ring 24 within the groove 16.  An oil-control ring 26 is received in the groove 18.

The piston 12 is pivotally secured on the top of a connecting rod 28 in a _per_ _se_ well-known manner.  The connecting rod 28 is   attached at the lower end thereof to a crankpin of a crankshaft 30 to be driven by rotation of the engine.  The piston 12 is thus slidable along the axis of the engine cylinder 10.  Lubricant oil is provided between the piston rings 20, 22 and 24 and the cylinder wall 32 of the engine cylinder 10 to allow smooth motion of the piston.

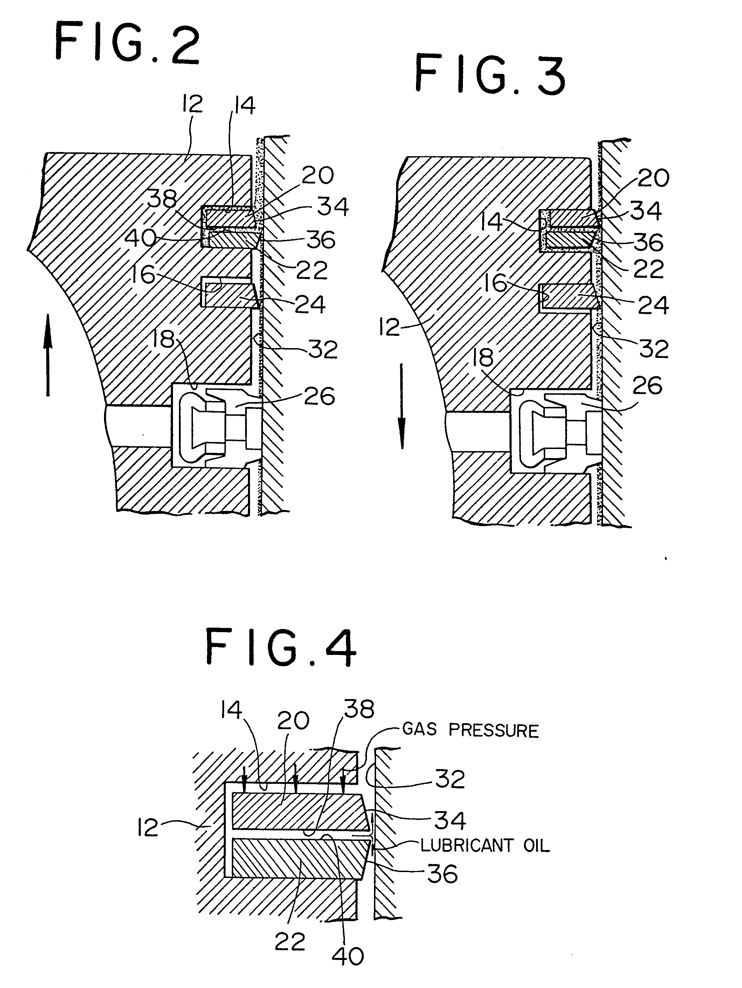

As shown in Figure 2, the piston rings 20 and 22 have substantially the same configurations and have tapered faces 34 and 36 respectively adjacent the cylinder wall 32. The piston ring 20 has its tapered face 34 directed upward and the piston ring 22 has its tapered face 36 directed downward. Both piston rings 20 and 22 are received within the groove 14 and have facing plane surfaces 38 and 40 respectively. Each of the piston rings 20 and 22 is movable with respect to the other according to the motion of the piston. Also, both piston rings 20 and 22 are movable back and forth with respect to the cylinder wall 32.

The piston ring 24 and the oil-control ring 26 are received within the grooves 16 and 18 respectively in a _per se_ well-known manner and with functions the same as those of their conventional counterparts.

Figure 2 shows the condition where the piston 12 is travelling upward. During this upward compression stroke of the piston, the piston ring 20 faces its tapered face 34 against the lubricant oil layer established on the cylinder wall 32 to maintain a relatively thick lubricant oil layer between the piston ring 20 and the cylinder wall 32. On the other hand, since the piston ring 22 faces the horizontal plane 40 against the lubricant oil layer the lubricant oil layer is scraped off the cylinder wall to make the layer thinner than that established by the piston ring 20. Therefore, the scraped lubricant oil is forced into the space between the piston rings 20 and 22. The lubricant oil introduced into the groove 14 is stored in the space between the piston rings 20 and 22 and carried along with the piston
rings 20 and 22.  During high speed motion the relative
position of piston rings 20 and 22 with respect to one
another and with respect to the groove 14 is maintained
as shown in Figure 2.  Adjacent the top dead centre
position of the piston stroke, since the relative speed
of the piston rings 20 and 22 with respect to the cylinder
wall 32 becomes approximately zero to cease scraping of
the lubricant oil layer and by the high pressure of the
gas in the combustion chamber the piston ring 20 is
forced toward the piston ring 22 to reduce the space
therebetween.  Due to the reduction of the space between
the piston rings 20 and 22, the lubricant oil in the
space is forced toward the cylinder wall 32 to establish
a lubricant oil layer on the cylinder wall and by the
establishment of this layer, the piston ring 22 is forced
away from the cylinder wall 32.  The lubricant oil layer
established on the cylinder wall is thus pressurized
according to the gas pressure applied to the piston
rings 20 and 22 and has a sufficient thickness to prevent
the piston rings and the cylinder wall from touching
and thus causing friction losses during engine operation.

In the downward piston expansion stroke, the
lower piston ring 22 is subjected to the relatively thick
lubricant oil layer to guide the lubricant oil into the
space between the piston rings 20 and 22 and the lower
piston ring 22 is pushed away from the cylinder wall 32,
as shown in Figure 3.  The introduced lubricant oil is
stored in the space between the upper and lower piston
rings 20 and 22 and moves downward together with the
piston 12 and piston rings 20 and 22.

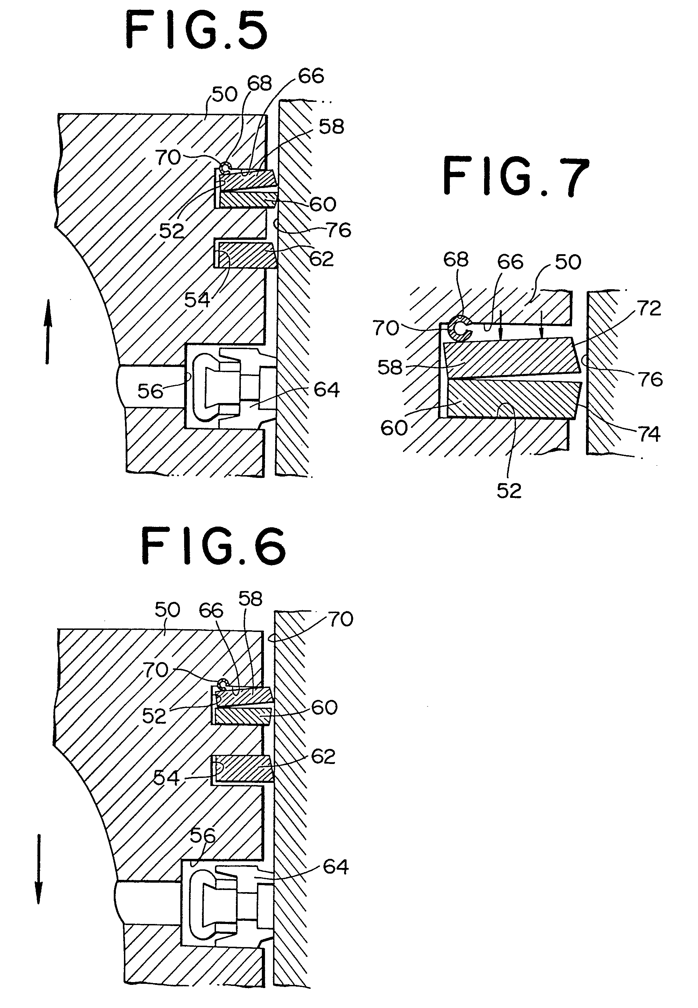

Referring to Figures 5 to 7, there is shown the
second embodiment of the piston sealing structure according to the present invention. Similar to the foregoing first embodiment, a piston 50 is formed with circumferentially extending grooves 52, 54 and 56. Piston rings 58 and 60 are received within the groove 52 and a piston ring 62 and an oil-control ring 64 are respectively received within the grooves 54 and 56 in a _per se_ well-known manner.

On the upper horizontal portion 66 of the groove 52 is formed a circumferentially extending recess 68 and a cross-sectionally substantially hollow circular ring 70 is received in the recess 68. The ring 70 contacts the piston ring 58 adjacent the inner end to resiliently urge the radially inner end of the piston ring 58 toward the piston ring 60.

Similar to the foregoing first embodiment, the piston rings 58 and 60 have the same configuration and have tapered faces 72 and 74 respectively. The piston rings 58 and 60 are positioned to direct the tapered faces 72 and 74 upwardly and downwardly respectively. As shown in Figures 5 to 7, the radially inner end of the piston ring 58 is urged by the ring 70 to contact the radially inner end of the piston ring 60.

On the compression stroke of the piston, the piston ring 58 maintains a relatively thick lubricant oil layer on the cylinder wall 76 and the piston ring 60 scrapes the lubricant oil to introduce the same into the space between the piston rings 58 and 60. According to the second embodiment, the piston rings 58 and 60 contact at their radially inner ends to prevent the lubricant oil from entering behind the radially inner end of the piston rings. Thus, even though the thickness of the lubricant oil layer is not remarkably varied, the sealing effect adjacent the top dead centre position of the piston stroke is sufficiently provided to effectively prevent blow dry.

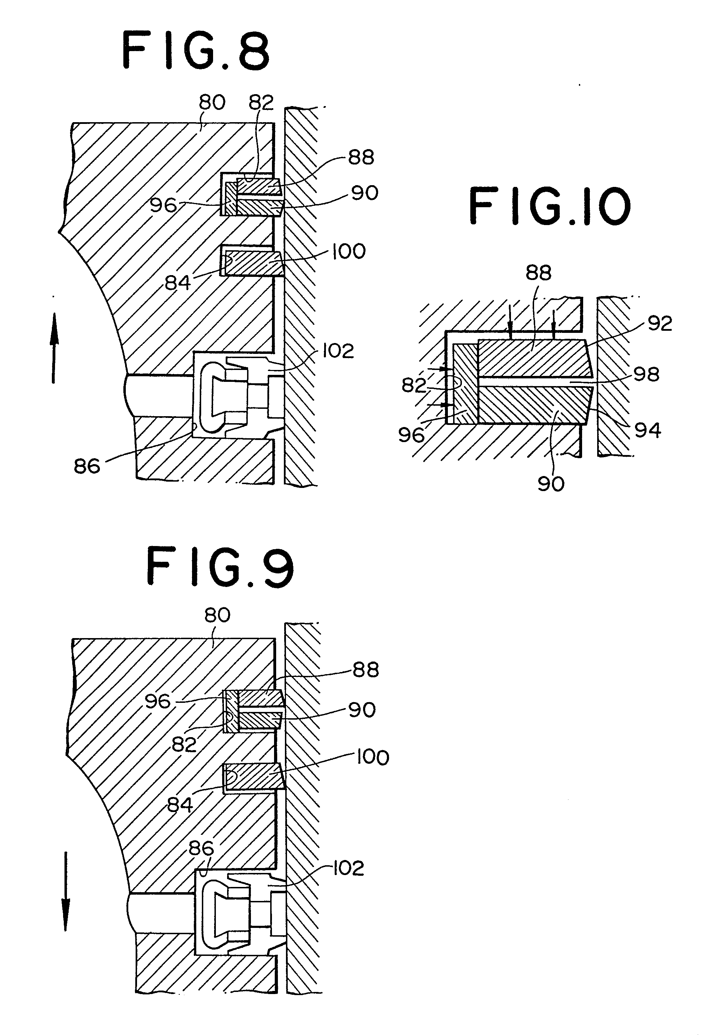

Figures 8 to 10 show a third embodiment of the piston sealing structure according to the present invention. A piston 80 is formed with grooves 82, 84 and 86. The groove 82 receives piston rings 88 and 90 therein in a position directing the tapered faces 92 and 94 upwardly and downwardly, respectively. On the radially inner surfaces of the piston rings 88 and 90, a sealing ring 96 is positioned to close the radially inner end of the space 98 formed between the piston rings 88 and 90. By closing the radially inner end of the space 98, the lubricant oil introduced into the space 98 is prevented from entering behind the piston rings 88 and 90, similar to the foregoing second embodiment.

In Figures 8 to 10, reference numerals 100 and 102 represent the piston ring and the oil-control ring respectively received within the grooves 84 and 86 respectively in a _per_ _se_ well-known manner.

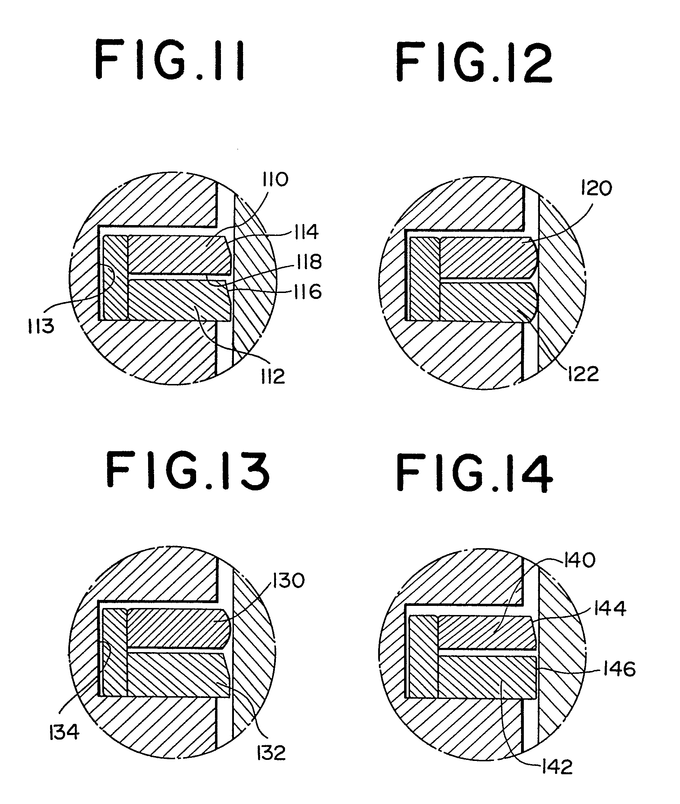

Figures 11 to 14 respectively show modifications of the third embodiment as set forth above. In these modifications, variations of the piston rings are shown for the sealing structures of the piston.

In Figure 11, there is shown a modification in which piston rings 110 and 112 are received within a groove 113 to direct the tapered faces 114 and 116 upwardly. The piston ring 110 has a tension larger than that of the piston ring 112.

In this construction, the lubricant oil is mainly scraped from the cylinder wall on the piston expansion stroke and brought into the space 118 between the piston rings 110 and 112. This may serve to reduce lubricant oil consumption. However, the tension of the piston rings 110 and 112 can be alternated from the foregoing. Namely, if the larger tension is provided for the piston ring 112 with respect to the piston ring 110, the lubricant oil is introduced into the space between the piston compression stroke.

In Figure 12, another modification of the third embodiment is illustrated. In this modification, piston rings 120 and 122 are barrel rings having rounded outer contacting surfaces. The piston rings 120 and 122 are provided with different tensions similar to the foregoing modification. The thickness of the lubricant layer is varied depending on the difference of the tension provided for the piston rings. Therefore, particularly in this modification, the tension of the piston ring 120 is preferable larger than that of the piston ring 122.

Figure 13 shows a further modification of the third embodiment in which piston rings 130 and 132 of different shapes are combined. In the specific construction, the barrel ring 130 and the tapered ring 132 are combined and received within the groove 134 of the piston. The tension of the piston rings 130 and 132 can be set equal to one another or can be varied depending on the engine operating characteristics. Of course, it is possible to alternate the postion of the piston rings 130 and 132. Also, the shapes of the piston rings to be provided in the piston groove can be varied or combined, in any way. For example, Figure 14 shows one variation of the combination of different-shaped piston rings 140 and 142. In this modification, the piston ring 140 has a tapered face 144 directed upwardly and the piston ring 142 has plane contact face 146 substantially parallel to the cylinder wall.

It should be noted that since the piston ring located higher than the other one is subject to substantially higher heat of the combustion gas, thus raising its temperature and reducing its tension, difference in the tensions of the upper and lower piston rings depends on engine operation. Therefore, it is not essential to provide the difference in the tension for the piston rings.

Since there are provided two piston rings in the upper sealing groove, a better sealing effect can be expected. Since two piston rings can provide a sufficient sealing effect, it is possible to remove the piston ring received in the lower sealing groove.

Thus, the present invention fulfills all the objects and advantages sought thereto.

1.

## CLAIMS

1.    A sealing structure for a piston of an internal combustion engine comprising:

a piston (12, 50, 80) formed with a plurality of grooves (14  16 18, 52 54 56, 82 84 86, 113, 134) around the periphery thereof, said piston including means for providing a lubricant oil to establish a lubricant oil layer between said piston and a cylinder wall (32, 76) of the engine cylinder,

an oil-control ring (26, 64, 102) mounted in the groove (18, 56, 86) in the lowermost position in relation to the other grooves;  and

a pair of piston rings (20  22, 58 60, 88 90, 110 112, 120 122, 130 132, 140 142) disposed in one of said grooves (14, 52, 82, 113, 134) other than the lowermost one, being spaced from each other and movable with respect one another and with respect to the cylinder wall.

2.    A sealing structure as set forth in claim 1, characterised in that said pair of piston rings are arranged in said groove so that the piston ring which is trailing with respect to the direction of motion of the piston serves to scrape the lubricant oil from the cylinder wall and introduce the scraped lubricant oil into the space defined between said piston rings.

3.    A sealing structure as set forth in claim 1, characterised in that said one of said grooves receiving said pair of piston rings is dimensioned so as to permit free motion of the piston rings in the radial and axial directions therein.

4.     A sealing structure as set forth in claim 3, characterised in that said space between said piston rings is variable according to the relative motion of the two piston rings and is filled with the lubricating oil.

5.     A sealing structure as set forth in any one of claims 1 to 4, characterised in that said structure further comprises a means (70, 96) for sealingly closing the radially inner end of the space defined between said piston rings.

6.     A sealing structure for a piston of an internal combustion engine comprising:

a piston (50, 80) disposed within an engine cylinder (76) of the engine for reciprocation therewithin and being formed with first and second circumferentially extending grooves (52 56, 82 86) on the periphery thereof;

an oil-control ring (64, 86) mounted in said second groove (56, 86) to control the amount of lubricant oil to be supplied between the piston and the cylinder wall of the engine cylinder;

a pair of piston rings (58 60, 88 90) disposed within said first groove (52, 82) and being spaced from each other and said piston rings having dimensions so as to be freely movable within said first groove in the vertical direction;  and

means (70, 96) for sealingly closing the radially inner end of the space defined between said piston rings.

7.    A sealing structure for a piston of an internal combustion engine comprising:

a piston (50, 80) disposed within an engine cylinder (76) of the engine for reciprocation therewithin and being formed with first and second circumferentially extending grooves (52 56, 82 86) on the periphery thereof;

an oil-control ring (64, 86) mounted in said second groove (56, 86) to control amount of the lubricant oil to be supplied between the piston and the cylinder wall of the engine cylinder;

a pair of piston rings (58 60, 88 90) disposed within said first groove (52, 82), said piston rings having dimensions suitable for free vertical motion in said first groove and said piston rings defining therebetween a space into which lubricant oil is introduced during the piston stroke, the space between said piston rings being variable according to the relative position of the piston rings;  and

means (70, 96) for sealingly closing the radially inner end of the space defined between said piston rings.

8.    A sealing structure as set forth in any one of claims 1 to 4, characterised in that said closing means is a sealing ring 96 disposed within said one groove (82) in a position sealingly contacting the radially inner surfaces of said piston rings.

9.    A sealing structure as set forth in claim 5, 6, or 7 characterised in that said closing means is a resilient member (70) disposed within said one groove (66) to urge one of said piston rings (58) toward the other piston ring (60) to resilient contact the radially inner end of said other piston ring.

10. A sealing structure as set forth in claim 8, characterised in that said piston rings have different tension.

11. A sealing structure as set forth in claim 8, characterised in that said piston rings (130 132, 144 ⁻46) have different configurations with respect to each other.

# FIG.1

# FIG.2

# FIG.3

# FIG.4

FIG.5

FIG.7

FIG.6

0069175

# FIG.8

# FIG.10

# FIG.9

# FIG.11

110
114
118
116
113
112

# FIG.12

120
122

# FIG.13

130
134
132

# FIG.14

140
144
146
142

**European Patent Office**

**EUROPEAN SEARCH REPORT**

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| X | FR - A - 1 346 052 (SEALED POWER CORP.)<br>* claim, page 2, left-hand column, lines 8 to 37, right-hand column , lines 46 to 52; fig. 1 to 3, 6, 7 * | 1,3 | F 02 F    5/00<br>F 16 J    9/00 |
| Y | * fig. 1, 3 *<br>& US - A- 3 174 762<br>-- | 6,7 | |
| Y | US - A - 1 805 404 (P.L. JOSLYN)<br>* page 1, lines 58 to 63; page 1, line 76 to page 2, lines 11; fig. 4 *<br>-- | 2,4,7 | **TECHNICAL FIELDS SEARCHED (Int.Cl. 3)** |
| Y | DE - B - 1 104 276 (GOETZEWERKE AG)<br>* claim; fig. *<br>-- | 5-7,11 | F 02 F    5/00<br>F 16 J    9./00 |
| Y | US - A - 2 938 758 (H.P. PHILLIPS)<br>* column 1, line 68 to column 2, line 1; fig. 1 *<br>-- | 5-8 | |
| Y | FR - A - 789 446 (S.G. HEYMERING)<br>* cl  ms; page 2, lines 1 to 23; fig. 3 *<br>-- | 1,9 | **CATEGORY OF CITED DOCUMENTS** |
| Y | FR - A - 1 359 788 (E. SZIGETI)<br>* page 1, lines 38 to 48; page 2, lines 14 to 24; fig. 1 *<br>--<br>./.. | 1,10 | X: particularly relevant if taken alone<br>Y: particularly relevant if combined with another document of the same category<br>A: technological background<br>O: non-written disclosure<br>P: intermediate document<br>T: theory or principle underlying the invention<br>E: earlier patent document, but published on, or after the filing date<br>D: document cited in the application<br>L: document cited for other reasons |

&: member of the same patent family, corresponding document

The present search report has been drawn up for all claims

| Place of search | Date of completion of the search | Examiner |
|---|---|---|
| Berlin | 21-01-1982 | CANNICI |

EPO Form 1503.1   06.78

## European Patent Office

## EUROPEAN SEARCH REPORT

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| Y | US – A – 2 746 820 (A.M. BRENNEKE) <br> * claim; fig. 2, 4 * <br> –– | 1,11 | |
| A | MOTORTECHNISCHE ZEITSCHRIFT, Vol. 36, No. 12, December 1975 Stuttgart A. MAY "Kolbenringe und Kegelventile in der Sicht der Abgasreinhaltung" pages 321 to 326 * the whole document * <br> –––– | | **TECHNICAL FIELDS SEARCHED (Int. Cl.³)** |

EPO Form 1503.2 06.78